# EUROPEAN PATENT APPLICATION

(11) **EP 4 604 326 A1**
(43) Date of publication of application: **20.08.2025**
(21) Application number: 24157803.8
(22) Date of filing: 15.02.2024
(51) Int. Cl.: H01R 13/443, H02G 15/013, H01R 13/53, H01R 13/6599

(54) **INTERFACE PLUG FOR ELECTRICAL CONNECTORS**

(71) Applicant: ABB SCHWEIZ AG, 5400 Baden (CH)
(72) Inventor: FONG, Robert, Bethlehem, PA, 18015 (US)
(74) Representative: Maiwald GmbH

(57) **Abstract**

The present invention relates to an interface plug (100) for an electrical connector (200), wherein the interface plug (100) comprises: at least one insulating element (1) for covering at least partially at least one interface (3) of the electrical connector (200), at least one engagement element (5) fixedly connected to the insulating element (1) and at least partially protruding from a front surface (7) of the insulating element (1) in an extension direction (300), wherein the engagement element (5) is engageable by an engagement tool (9) such that a force is applicable by the engagement tool (9) to the interface plug (100) via the engagement element (5); wherein the engagement element (5) comprises at least one breaking feature (11), which is adapted to break when the force applied by the engagement tool (9) exceeds a predetermined threshold limit, wherein, when the breaking feature (11) breaks, the engagement tool (9) is disengaged from the engagement element (5).

## Description

### 1. FIELD OF THE INVENTION

The invention relates to an interface plug for an electrical connector, an electrical connector, a method for manufacturing an interface plug for an electrical connector, and a use of an interface plug.

### 2. BACKGROUND

Electrical connectors, such as for instance separable electrical connectors operating in a range of 12kV to 36kV often comprise interface plugs for covering unused or open interfaces from the electrical connectors. Hence, in the covered condition, said interfaces are electrically insulated to the environment. In many instances it may be beneficial to mount or tighten the interface plugs at the connector with a specific force or torque. Consequently, force or torque limiting application tools are often used in the field, which may allow to preset and apply a certain amount of force or torque to the interface plugs. However, in case such force or torque limiting tools are not available, the interface plugs may only be tightened by common tools, e.g. common wrenches, which always bears the risk of over- and/or under-tightening of the interface plug by a user.

Thus, there exists a need for improved interface plugs and methods for employment.

### 3. SUMMARY OF THE INVENTION

The object is achieved by the present invention according to the independent claims. Preferred embodiments of the invention are provided in the dependent claims, the description, and the accompanying figures.

The present invention relates to an interface plug for an electrical connector.

The interface plug comprises at least one insulating element for covering at least partially at least one interface of the electrical connector.

The interface plug further comprises at least one engagement element fixedly connected to the insulating element and at least partially protruding from a front surface of the insulating element in an extension direction.

Further, the engagement element is engageable by an engagement tool such that a force is applicable by the engagement tool to the interface plug via the engagement element.

Further, the engagement element comprises at least one breaking feature, which is adapted to break when the force applied by the engagement tool exceeds a predetermined threshold limit.

Further, when the breaking feature breaks, the engagement tool is disengaged from the engagement element.

Thus, an improved interface plug may be provided, which may allow for a proper coverage of an interface of an electrical connector without the need of employment of particular force or torque limiting tools. Accordingly, over- and/or under tightening may be prevented and the flexibility for the application of the interface plug may be enhanced.

An interface plug may comprise any shape suitable to cover a respective interface of the corresponding electrical connector. For instance, the interface plug may be shaped in a cone or cylinder comprising a portion of an increased diameter at a side that faces the environment of the electrical connector. The plug may be inserted in a respective reception of the electrical connector and may cover the interface of the electrical connector. However, also different shapes may be provided, as desired.

An interface may include any interface of electrical connector that may allow an access, e.g. from an environment to one or more electrically conducting parts arranged inside the electrical connector. Covering of the interface may include to prevent at least partially an access to the one or more conducting parts of the electrical connector via the insulating element.

The interface plug may comprise one or more insulating elements, which may comprise or consist of an epoxy resin or any other suitable material, such as plastic materials or rubber, that may allow forming the insulating element for achieving a proper electrical insulation of conducting parts of the electrical connector with respect to an environment.

An engagement element may include one or more elements that may be sufficiently mechanically stable and fixedly connected to the insulating element, and which may be engageable by an engagement tool and may accordingly provide a force transmission from the engagement tool to the insulating element via the engagement element. A fixed connection, which may be a permanent connection between the engagement element and the insulating element, may be achieved by any suitable connecting means, such as for instance an embedding of at least a part of the engagement element in the insulating element, a gluing of the respective parts etc.

The engagement element may protrude to a certain extent from a front surface of the insulating element to allow an engagement tool approaching from the outside or the environment to engage the engagement element for transmitting a force accordingly. For instance, the engagement element may extend about 23 mm from the front surface. However, also different extension values may be foreseen, dependent on the material used, the force to be transferred and the tool engaging the engagement element. The engagement element may comprise a mechanically robust material to allow a force reception from the tool and force transmission to the insulating element without taking unwanted damage, such as a metal material, e.g. stainless steel, brass, copper, aluminum etc. However, also one or more different materials may be foreseen, such as for instance any plastic or carbon fiber materials providing the desired mechanical properties.

An extension direction may be understood as a direction of extension of the engagement element away from the insulating element. This may be opposite to a mounting direction, along which the interface plug is to be mounted to the electrical connector.

The front surface of the insulating element may include a surface that may face an environment in a mounted condition of the interface plug. In other words, the front surface may include a surface of the insulating element that is the farthest away from the electrical connector. The front surface may be shaped as a flat circular surface. However, also any other shape may be provided.

After an engagement tool has engaged the engagement element, a force may be applied to the interface plug from a user, e.g. manually or automatically e.g. by respective electric, hydraulic or pneumatic means, which may include a translational force along the mounting direction and/or a rotational force or torque perpendicular to the mounting direction.

The breaking feature may be considered as a predetermined weak point of the engagement element, which may break first when a certain amount of force or torque is applied. In some embodiments, the breaking feature may be a separate part connected to the engagement element. In other embodiments, the breaking feature may be an integral part of the engagement element.

The breaking of the breaking feature may include an at least partial disconnection of parts of the engagement element that may be previously connected by the breaking feature. The breaking feature may include an any suitable shape, e.g. including a cross-sectional shape, as seen in a direction perpendicular to an extension direction, such as a circular, oval, rectangular shape. Also, more than one breaking feature may be provided.

The predetermined threshold limit may be defined by the shape, size and material used for the breaking feature and the kind of force that may be applied thereto, for instance dependent on a rotational force or torque or a translational force applied. A disengagement of the engagement tool from the engagement element may include a corresponding separation of the engagement tool and the engagement element, such that no further force could be transmitted from the engagement tool to the insulating element.

In some embodiments, opposite to the front surface of the insulating element, the interface plug may comprise a plug receiving portion which may be made of a different material than the insulating material of the insulating element. In some embodiments, the plug receiving portion may be made of the same material as the engagement element. The plug receiving portion may comprise a mechanically robust material, such as a metal, e.g. stainless steel, brass copper, aluminum etc. However, also one or more different materials may be foreseen, such as any plastic materials or carbon fiber materials that may provide the desired mechanical properties. The plug receiving portion may comprise at least one screw reception portion and at least one nut reception portion, which may be adapted to receive and hold corresponding one or more screws and one or more nuts of an electrical connector, e.g. a screw that is connected to a conductor of the electrical connector.

In some embodiments two or more of the insulating element, the engagement element and/or the plug receiving portion may be integrally formed.

In a preferred embodiment, the engagement element at least partially comprises a hexagonal cross-sectional shape as seen in a direction perpendicular to the extension direction.

Thus, an employment of engagement tools comprising a corresponding hexagonal reception may be enabled to apply a suitable mounting or unmounting force to the interface plug. Accordingly, a proper force transmission, in particular of rotational forces or torques may be achieved. During the application of a respective force or torque, the surfaces and edges of the hexagonally shaped engagement element may contact respective contacting surfaces of the engagement tool. However, also different cross-sectional shapes may be provided as desired, such as for instance triangular, square or rectangular cross-sectional shapes.

In a preferred embodiment, the engagement element comprises at least one first thickness in a plane perpendicular to the extension direction, and the breaking feature is formed by at least one narrowed portion having at least one reduced thickness compared to the first thickness.

Thus, a weak point or constriction may be formed at the engagement element, which may be adapted to break first upon application of a certain amount of force or torque. A first thickness may include an extension of the engagement element in a plane perpendicular to the extension direction, which may be, in case of a circular or elliptic cross-sectional shape of the engagement element one or more diameters. Said extension may be reduced or narrowed, such that the breaking feature may be formed by a portion of the engagement element having a reduced diameter. The first thickness of the engagement element may be constant along its extension direction or may vary such that one or more portions of different thicknesses may be provided at the engagement element, which however may not form the breaking feature. In some embodiments, also more than one narrowed portion may be provided. The reduced thickness may be accordingly chosen such that a breaking of the breaking feature may be achieved when a certain amount of force or torque is applied.

In a preferred embodiment, the narrowed portion has a thickness in a range of 0.5 mm to 50 mm, preferably in a range of 2 mm to 25 mm, more preferably in a range of 5 mm to 15 mm, and most preferred about 8.5 mm. In a preferred embodiment the narrowed portion extends in the extension direction in a range of 0.05 to 5 mm, preferably in a range of 0.1 mm to 3 mm, more preferably in a range of 0.5 mm to 2 mm, and most preferred about 1.6 mm.

Thus, on the one hand, sufficient stability for a force transmission may be obtained, while, at the same time, a proper breaking at certain predetermined forces or torques may be achieved. The extension along the extension direction and the thickness perpendicular thereto may be chosen as desired and may depend on the materials employed for the engagement element. The above noted values may be employed for instance for an engagement element comprising a mechanically robust material such as stainless steel, copper, brass, aluminum etc.

In a preferred embodiment, the narrowed portion is formed as a truncated cone having a lateral outer surface which inclines in the extension direction in a range of 10° to 60°, preferably in a range of 15° to 50°, more preferably in a range of 25° to 35° mm, and most preferred about 30°.

In other words, a thickness of the narrowed portion may increase with increasing extension in the extension direction. Thus, a particular beneficial design of the breaking feature may be provided, which facilitates a defined disintegration. In particular, the breaking feature may accordingly exhibit a first interface with an increased diameter, which may be connected to a first engagement element portion of the engagement element, and a second interface with a reduced diameter, which may be connected at an opposite side of the breaking feature to a second engagement element portion of the engagement element. For instance, the first engagement element portion may be a portion of the engagement element arranged further away from the insulating element, i.e. arranged at a greater distance from the insulating element in the extension direction. And the second engagement element portion may be a portion of the engagement element arranged closer to the insulating element, i.e. arranged at a shorter distance to the insulating element in the extension direction.

Thus, when the breaking feature breaks, and the first engagement element portion of the engagement element is separated from the second engagement element portion, the separation may occur at the interface between the breaking feature and the second engagement element portion. Further, the remaining part of the breaking feature may stay attached to the first engagement element portion when the first engagement element portion is disconnected or sheared off from the second engagement element portion. In other embodiments, the lateral surface may not incline but decline in the extension direction and the separation may accordingly occur at the interface between the breaking feature and the first engagement element portion. Thus, the remaining part of the breaking feature may stay attached to the second portion when the first engagement element portion is disconnected or sheared off from the second engagement element portion.

In a preferred embodiment, the engagement element comprises at least one engagement limiting feature arranged at an outer lateral surface of the engagement element, wherein the engagement limiting feature is adapted to limit an engagement depth of an engagement tool engaging the engagement element against the extension direction.

Accordingly, an engagement of the engagement tool may be delimited to a certain portion of the engagement element. It may be accordingly prevented that the engagement can engage the engagement element at undesired regions. For instance, it may be prevented that the engagement of the engagement tool extends beyond the breaking feature. Also, more than one engagement limiting feature may be provided.

An engagement depth may be determined from an outer front surface of the engagement element in the direction against the extension direction, i.e. the mounting direction, of the engagement element. That is, an engagement depth may include a distance which engagement tool is allowed to engage the engagement element in the mounting direction. An outer lateral surface may include for instance one or more surfaces that are engageable from an outside, and which surfaces may extend essentially along the extension direction of the engagement element. For instance, in case the engagement element has a hexagonal shape, the engagement element may comprise six essentially flat outer lateral surfaces, which the engagement tool may accordingly engage.

In a preferred embodiment, the engagement limiting feature is formed by at least one recess arranged at the outer lateral surface of the engagement element and at least one ring at least partially arranged in the recess, wherein at least a portion of an outer surface of the ring extends beyond the outer lateral surface of the engagement element.

Thus, an easy to implement and robust means for delimiting the engagement depth of an engagement tool may be provided. In other words, an engagement tool approaching and engaging the engagement element may only be moved for instance in the mounting direction toward said engagement element until it contacts the ring. A further movement of the engagement tool may then be accordingly prevented.

The recess may be an at least partial circumferential rectangular or half circular recess at the outer surface of the engagement element. The recess may be accordingly formed such that that the ring could be inserted into the recess wherein it may snugly fit. The ring may comprise or be made of any sufficiently stable material, such as a metal material, e.g. steel, or a plastic material etc. For instance, the ring may be made of the same material as the engagement element. The ring may be fully closed ring or may be only a partial ring having an opening at one side. For instance, the ring may have an opening that may be adapted to allow flexibly bending the ring when the ring is forced into the recess for creating the engagement limiting feature. The ring may have a circular or rectangular or any other suitable cross-sectional shape with a diameter or thickness selected in accordance with the dimensions of the recess such that an outer portion of the ring may extend beyond the lateral surface of the engagement element when the ring is in a mounted condition.

In a preferred embodiment, the engagement limiting feature is arranged at the engagement element in a region between the front surface of the engagement element and the breaking feature.

Thus, it may be ensured that an engagement may not extend beyond the breaking feature when the engagement tool approaches the engagement element from the front surface in the mounting direction. Accordingly, the engagement tool may only contact the portion of the engagement element that should be separated from the insulating element once the breaking feature breaks. The region may be a central region of the engagement element, e.g. arranged in a middle third of the engagement.

In a preferred embodiment, the engagement element is adapted to be engageable by a rotational engagement tool such that, upon engagement of the rotational engagement tool with the engagement element, a torque can be applied by the engagement tool to the interface plug via the engagement element, and the breaking feature is adapted to break when the applied torque exceeds a predetermined torque threshold limit. In a preferred embodiment, the predetermined torque threshold limit is set in a range of 5 to 200 Nm, preferably in a range of 10 to 100 Nm, more preferably in a range of 20 to 50 Nm, and most preferred to about 32 Nm.

Thus, interface plugs may be employed which may be mounted to an electrical connector via a rotational movement of the interface plug. Further, suitable maximum torque values may be pre-set or predetermined with respect to the particular needs of the interface plug. Respective rotational engagement tools, such as for instance torque tools, common wrenches, socket wrenches etc., which may have a lever that may allow a user to apply an increased torque could be employed. Thus, a respective outer part of the engagement element, which may be a first engagement element portion may be sheared off when the applied torque exceeds a predetermined torque threshold limit. The torque may be applied in a first rotational direction to tighten or mount the interface plug at an electrical connector and applied in the second rotational direction to loosen or disconnect the interface plug from the electrical connector. The interface plug may be accordingly provided with rotational engagement means for engaging an electrical connector in a rotational manner and the electrical connector may be accordingly provided with respective counter means for engaging the rotational engagement means of the interface plug. This may be for instance achieved by providing one or more screw threads provided at the interface plug and/or at the electrical connector and respective counter means interacting accordingly during engagement of the interface plug and the electrical connector. Thus, the engagement element may be tightened or screwed-in the mounting direction for covering an interface of the electrical connector and may be loosened or screwed-out in the extension direction for uncovering the interface of the electrical connector.

The present invention further relates to an electrical connector comprising the interface plug according to the present invention. In a preferred embodiment, the electrical connector is a separable connector operating in a range of 12kV to 36kV.

Thus, an electrical connector may be provided which infaces may be properly covered by corresponding interface plugs without the need of particular force or torque limiting tools. Thus, over- and/or under tightening may be prevented and common tools having no tool-side force or torque limiting means may be used, which may enhance the flexibility for the application of the interface plug and the mounting of the electrical connector. Furthermore, a safe use of said connectors by a proper insulation of interfaces of the electrical connector can be ensured, in particular for electrical connectors operating at higher voltages, such as 12 kV to 36 kV, wherein an uncovered or not properly covered interface may lead to severe consequences. However, the electrical connector may be generally employed at any desired voltage. The advantages and features described above with respect to the interface plug may accordingly apply likewise to the electrical connector.

The electrical connector may comprise one or more interfaces and accordingly may comprise one or more interface plugs, as described in this disclosure. In case multiple interface plugs are provided, the different interface plugs may have the same orientation, i.e. they may extend in essentially the same direction, or they may have different orientations, i.e. they may extend in different directions, for instance opposite directions. Thus, an engagement member of a first interface plug may extend in a first extension direction and a second engagement member of a second interface plug may extend in a different second extension direction, for instance opposite to the first extension direction. The first and second interface plugs may be inserted or mounted against the respective first and second insertion directions, respectively, for instance in respective first and second mounting directions. The first and second interface plugs may be mounted for instance at respective receptions of the electrical connector and may cover respective first and second interfaces. The first and second interfaces may be accordingly arranged at the same side of the electrical connector or at different sides, e.g. opposite sides of the electrical connector.

The electrical connector may comprise a conductor which may be at least partially covered by a respective insulation. The conductor may extend, for instance, when the connector is provided in an upright position, from a bottom side to a top side of the electrical connector. At a first engagement element portion of the electrical connector, which may be an upper portion when the electrical connector essentially extends in a vertical direction, a threaded screw may be provided which may extend in a direction perpendicular to the vertical direction. The threaded screw may be connected at the upper portion to the electrical conductor. The screw may extend into respective screw reception portions provided at one or more plug receiving portions of the engagement elements. Furthermore, nuts may be mounted on the threaded screw, and may be received by respective nut reception portions provided at one or more plug receiving portions of the engagement elements. In different embodiments, also more conductors and respective insulation means may be provided at the electrical connector, such as three, four, five etc. conductors. In some embodiments these conductors may be commonly connected or mounted to the screw. The above-described extension direction of the conductor, the connector and its respective parts are merely exemplary, and the respective parts of the electrical connector may be arranged in any desired manner.

The present invention further relates to a method for manufacturing an interface plug according to the present invention.

The method comprises the step of providing an insulating element for at least partially covering an interface of the electrical connector.

The method further comprises the step of providing an engagement element which is engageable by an engagement tool such that, upon engagement of the engagement tool with the engagement element, a force is applicable by the engagement tool to the interface plug via the engagement element, wherein the engagement element comprises a breaking feature, which is adapted to break when a force applied by the engagement tool exceeds a predetermined threshold limit, wherein, when the breaking feature breaks, the engagement tool is disengaged from the engagement element,

The method further comprises the step of fixedly connecting the insulating element and the engagement element such that the engagement element at least partially protrudes from a front surface of the insulating element in an extension direction.

Thus, an improved method for manufacturing an interface plug as described above may be provided, wherein the interface plug may allow the reception of a force applied by an engagement tool, while preventing over- and/or under tightening of the interface plug. The above noted advantages with respect to the interface plug and the electrical connector described above accordingly apply to the method presented herein.

In some embodiments, the method may further comprise the step of providing a plug receiving portion and the step of fixedly connecting the insulating element and the plug receiving portion. In some embodiments, the plug receiving portion may be provided opposite to the front surface of the insulating element, and the engagement element may comprise the same or a different material than the insulating element. The step of fixedly connecting the engagement element and/or the plug receiving portion with the insulating element may comprise the step of embedding at last a part of the engagement element and/or the plug receiving portion in the insulating element. In some embodiments, the step of fixedly connecting the engagement element and/or the plug receiving portion with the insulating element may comprise the step of gluing at least a part of the engagement element and/or the plug receiving portion with the insulating element.

The present invention further relates to a use of an interface plug according to the present invention.

The use comprises the step of providing an electrical connector.

The use further comprises the step of providing the interface plug.

The use further comprises the step of attaching the interface plug to the electrical connector.

The step of attaching comprises the step of engaging the interface plug with an engagement tool.

The step of attaching further comprises the step of applying a force by the engagement tool to the interface plug via the engagement element until the breaking feature breaks.

Thus, an improved use of an interface plug as described herein may be provided, which may provide for a proper coverage of an interface of an electrical connector without the need of particular force or torque limiting tools. Thus, undesired over- and/or under tightening may be prevented and common tools for having no tool-side force or torque limiting means may be used, which may enhance the flexibility for the application of the interface plug. At the same time, a safe operation of the electrical connector, which may be of particular relevance when higher voltages are employed, may be safeguarded.

Further features, examples, and advantages will become apparent from the following detailed description of preferred embodiments and the accompanying figures.

### 4. BRIEF DESCRIPTION OF THE DRAWINGS

For a better understanding of the present invention, and to illustrate its practicality, figures are provided in the following and reference is made thereto. It should be understood that the figures represent only exemplary embodiments and thus in no way limit the scope of the claimed invention. Identical or like-acting elements are indicated throughout by the same or like reference signs. In particular, as used herein, a hyphenated form of a reference sign refers to a specific embodiment of an element and the unhyphenated form of the reference numeral refers to the collective element. For example, a device "5-1" refers to an instance of a device class that can be collectively referred to as device "5" and each of which can be generically referred to as device "5". Any reference signs in the claims should not be construed as limiting the scope of the claims.

In the accompanying drawings,
- Figure 1: schematically illustrates an interface plug according to an embodiment of the present invention;
- Figure 2: schematically illustrates a cross-sectional view of an embodiment of an interface plug according to an embodiment of the present invention;
- Figure 3: schematically illustrates an electrical connector according to the present invention;
- Figure 4: schematically illustrates a flow diagram of an embodiment of a method according to the present invention;
- Figure 5: schematically illustrates a flow diagram of an embodiment of a use of an interface plug according to the present invention.

### 5. DESCRIPTION OF EMBODIMENTS

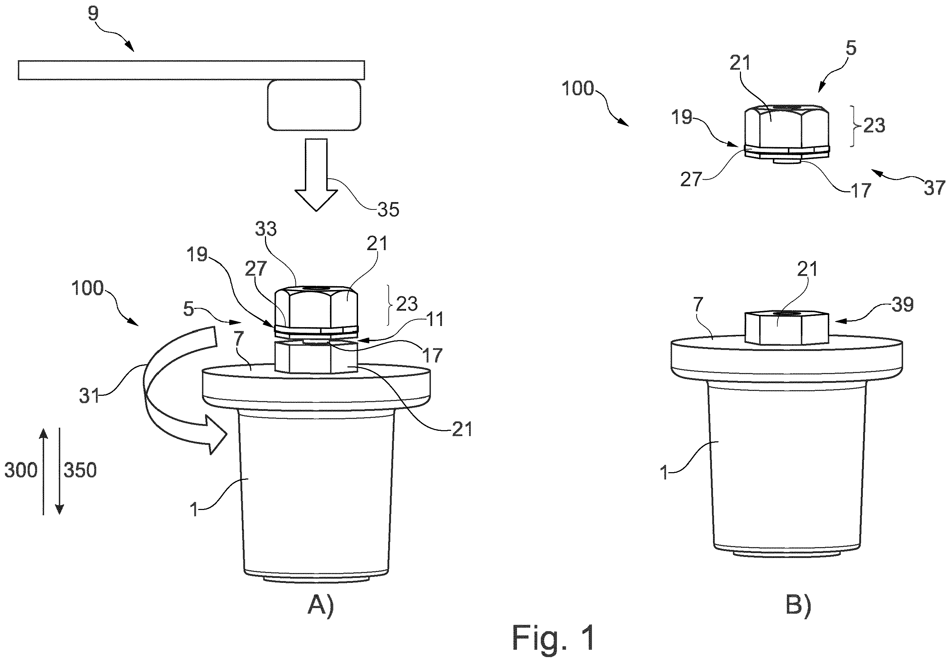

Figure 1 depicts an interface plug 100 according to the present invention. In particular, a first configuration of the interface plug 100 is shown in subfigure 1A) and a second configuration of the interface plug 100 is shown in subfigure 1B), which configurations will be explained in detail further below.

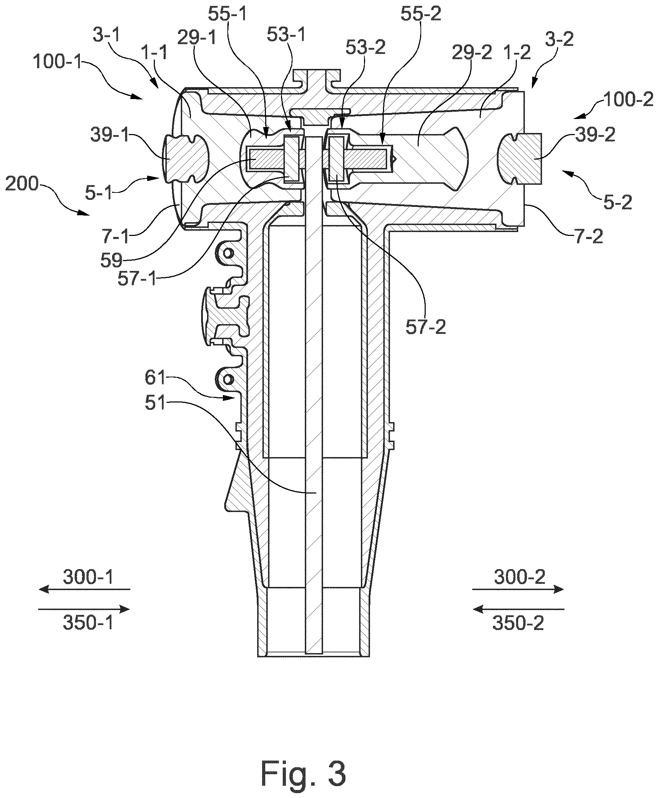

The interface plug 100 comprises an insulating element 1 for covering an interface 3 of an electrical connector 200 (cf. Fig. 3). The insulating element 1 is made of an epoxy resin, which is suitable for electrical insulation. The insulating element 1 has a cylinder shape with an increased diameter at its top portion. From a front surface 7 of the top portion, along an extension direction 300, an engagement element 5 protrudes, which is fixedly connected with the insulating element 1. The engagement element 5 is made of a metal material. The engagement element 5 is formed to allow an engagement with an engagement tool 9. The engagement tool 9, which is in the depicted embodiment exemplarily shown as a socket wrench, comprises a receiving portion at its lower end that is adapted to receive an outer lateral surface 21 of the engagement element 5.

As depicted, the engagement element 5 comprises a front surface 33 extending essentially perpendicular to the outer lateral surface 21, wherein the front surface is the surface of the engagement element 5 facing away from the insulating element 1 in the extension direction 300. The engagement tool 9 may accordingly initially engage the engagement element 5 in a direction as indicated by the downward pointing arrow 35. Then, a force could be applied via the engagement tool 9 by a user, which is, in the depicted embodiment, a rotational force or torque, in a direction as indicated by arrow 31. The torque 31 is accordingly transferred from the engagement element 5 to the insulating element 1 due to the fixed connection between the insulating element 1 and the engagement element 5. Consequently, the whole interface plug 100 is rotated as depicted by the arrow 31 around its rotation axis. The rotation of the interface plug 100 leads to an engagement, fixation or tightening of the interface plug 100 with the electrical connector 200 (cf. Fig. 3) essentially along the mounting direction 350.

The engagement element 5 comprises a breaking feature 11, which is adapted to break when the force applied by the engagement tool 9 exceeds a predetermined threshold limit. In the depicted embodiment, the breaking feature 11 is formed by a narrowed portion 17, which forms a predefined weak spot in the structure of the engagement element 5. The narrowed portion 17 is formed as a truncated cone having a lateral outer surface which inclines in the extension direction of about 30°. Thus, the thickness of the narrowed portion 17 at the interface to the first engagement element portion 37, which is in the depicted embodiment the upper portion of the engagement element 5, is larger than the thickness at the interface to the second engagement element portion 39 (cf. figure 1B), which is in the depicted embodiment the lower portion, of the engagement element 5. When the breaking feature 11 breaks, and the first engagement element portion 37 is separated from the second engagement element portion 39, the separation occurs at an interface between the breaking feature 11 and the second engagement element portion 39. Accordingly, as depicted in Fig. 1B), the remaining part of the breaking feature 11 stays attached to the first engagement element portion 37 when the first engagement element portion 37 is disconnected or sheared off from the second engagement element 19portion 39.

The torque applied by the engagement tool 9 increases with increasing tightening of the interface plug 100 at the connector 200. Once the torque exceeds a certain threshold limit, the breaking feature 11 breaks and the first engagement element portion 37 of the engagement element 5 is disconnected or sheared off from the second engagement element portion 39 of the engagement element 5, as depicted in sub figure 1 B). Thus, since the threshold limit is predefined to a particular value, it can be safeguarded that the torque applied has reached a certain value. Thus, an under-tightening of the interface plug 100 can be prevented and a sufficient tight fixation of the interface plug 100 is ensured. Furthermore, also an over tightening of the interface plug 100 is prevented since the engagement tool 9 is disengaged from the interface plug 100 once the breaking feature 11 breaks. This prevents damage to the interface plug 100 and/or the electrical connector 200.

As depicted in sub-figure 1B), after the first engagement element portion 37 of the engagement element 5 has sheared off, the second engagement element portion 39 of the engagement element 5 remains fixedly connected with the insulating element 1 at the front surface 7. Thus, the engagement tool 9 could be used subsequently to engage and remove the interface plug 100 by engaging the second engagement element portion 39 and applying respective counter rotation, i.e. in a rotation direction against the rotation direction, indicated by arrow 31, which is in the depicted embodiment a counterclockwise rotation. However, it will be appreciated that the rotation direction may be selected as desired, and that respective rotation direction may be clockwise or counterclockwise.

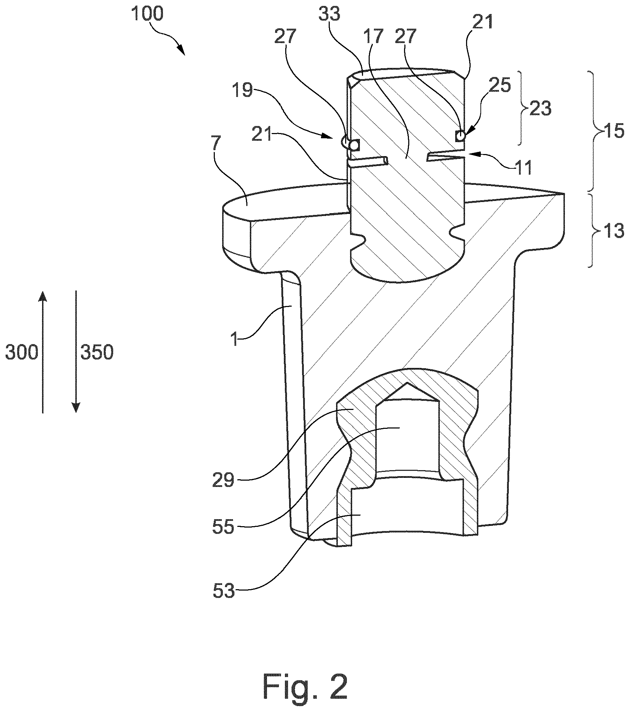

Furthermore, the engagement element 5 comprises an engagement limiting feature 19 arranged at the lateral surface 21 of the engagement element 5. Thus, the engagement tool 9 can only engage the engagement element 5 against the extension direction 300 or along the mounting direction 350 (i.e. in a direction of the downward pointing arrow 35) up to a certain depth or distance, until it contacts the engagement limiting feature 19. As depicted and described also further below with respect to Fig. 2, the engagement limiting feature 19 is formed by a recess 25 arranged at the outer lateral surface 21 of the engagement element 5 and a ring 27 arranged in the recess 25. Accordingly, an outer surface of the ring 27 extends beyond the outer lateral surface 21 of the engagement element 5 and accordingly blocks a further downward movement of the engagement tool 9. As depicted, the engagement element 5 at least partially has an essentially hexagonal cross-sectional shape as seen in a direction perpendicular to the extension direction 300. Thus, a correspondingly formed opening in the engagement 9 can properly receive the hexagonal shape of the outer lateral surface 21.

Figure 2 depicts the embodiment shown in figure 1 A) in a cross-sectional view along the extension direction 300, and with respect to the description of the elements depicted, it is accordingly referred to figure 1, in particular to subfigure 1 A). From figure 2, it could be particularly well recognized that the engagement limiting feature 19 is formed by a recess 25 arranged at the outer lateral surface 21 of the engagement element 5 and a ring 27 arranged in the recess 25. Furthermore, it is shown that the engagement element 5 comprises an inner engagement element portion 13 received from and fixedly held by the insulating element 1. Further, the engagement element 5 comprises an outer engagement element portion 15 protruding from an exterior surface of the insulating element 1 in the extension direction. In the depicted embodiment, the inner engagement element portion 13 and the outer engagement element portion 15 are integrally formed. However, in different embodiments, it may be well conceived that the inner engagement element portion 13 and the outer engagement element portion 15 may also comprise two or more parts which are accordingly connected. The outer surface 21 may be provided as lateral surfaces of a hexagonal body at the first engagement element portion 37 and likewise at the second engagement element portion 39 to allow a respective engagement with the engagement tool 9.

Opposite to the insulating element front surface 7, i.e. here at the bottom surface, the interface plug 100 comprises a plug receiving portion 29 made of a different material than the insulating material of the insulating element 1. The plug receiving portion 29 comprises a screw reception portion 55 and a nut reception portion 53, which are adapted to receive a corresponding screw 59 and nut 57 provided at the electrical connector 200, as schematically depicted in figure 3.

As is clearly visible in the depicted embodiment, the narrowed portion 17 has a reduced thickness, here a reduced diameter, compared thickness or diameter of the engagement element 5 in a plane perpendicular to the extension direction 300. The narrowed portion has an essentially circular cross-sectional shape as seen in the direction perpendicular to the extension direction 300. In particular, the thickness of the narrowed portion is about 8.5 mm. Furthermore, the narrowed portion extends in the extension direction 300 for about 1.6 mm. Thus, a small web is created within the engagement element 5, which forms a predetermined breaking point if a tool, such as the engagement tool 9 engages the first engagement element portion 37 of the engagement element 5 and accordingly shears-off from the first engagement element portion 37 when an applied torque exceeds a certain threshold limit.

Figure 3 shows an embodiment of an electrical connector 200 according to the present invention. In the depicted embodiment, two differently shaped and sized interface plugs 100-1 and 100-2 depicted according to the present invention are shown in a fully mounted manner. In different embodiments of the electrical connector 200, a different number of interface plugs 100 may be provided, such as one interface plug 100 or three or more interface plugs 100. Notably, the different interface plugs 100-1 and 100-2 have different orientations, namely extending in opposite directions (cf. extension directions 300-1 and 300-2). Thus, an engagement member 5-1 of the first interface plug 100-1 extends in a first extension direction 300-1. Likewise, an engagement member 5-2 of the second interface plug 100-2 extends in a different second extension direction 300-2, opposite to the first extension direction 300-1. Consequently, the interface plugs 100-1 and 100-2 are inserted or mounted in corresponding different first and second mounting directions 350-1 and 350-2, respectively, at respective receptions provided at opposite sides of the electrical connector 200 to cover respective first and second interfaces 3-1 and 3-2.

As depicted, the first engagement element portions 37 (not shown) of the engagement elements 5-1 and 5-2 have been fully sheared off and only the second engagement element portions 39-1 and 39-2 remain. In the depicted embodiment, the engagement elements 5-1 and 5-2 have been tightened with a torque that exceeded a certain predetermined threshold limit, and thus a proper tightening of the engagement elements 5-1 and 5-2 at the electrical connector 200 is achieved.

Furthermore, figure 3 shows that the electrical connector 200 comprises a conductor 51 which is at least partially covered by a respective insulation 61. The conductor 51 extends in the depicted embodiment from the bottom to the top side of the electrical connector 200. However, this extension may vary dependent on the arrangement of the electrical connector 200. At the top side, a threaded screw 59 is provided which extends in a direction perpendicular to the conductor 51, and the conductor 51 is connected thereto. The screw 59 extends into the respective screw reception portions 55-1 and 55-2 provided at the plug receiving portions 29-1 and 29-2 provided at each side of the insulating elements 1-1 and 1-2 opposite to the insulating element front surface 7-1 and 7-2, respectively. Furthermore, respective nuts 57-1 and 57-2 are received by respective nut reception portions 53-1 and 53-2, likewise provided at each side of the insulating elements 1-1 and 1-2 opposite to the insulating element front surface 7-1 and 7-2, respectively. In different embodiments, also more conductors 51 may be provided at the electrical connector 200, such as three, four, five etc. conductors 51. In some embodiments the plurality of conductors 51 may be commonly connected and mounted to the screw 59.

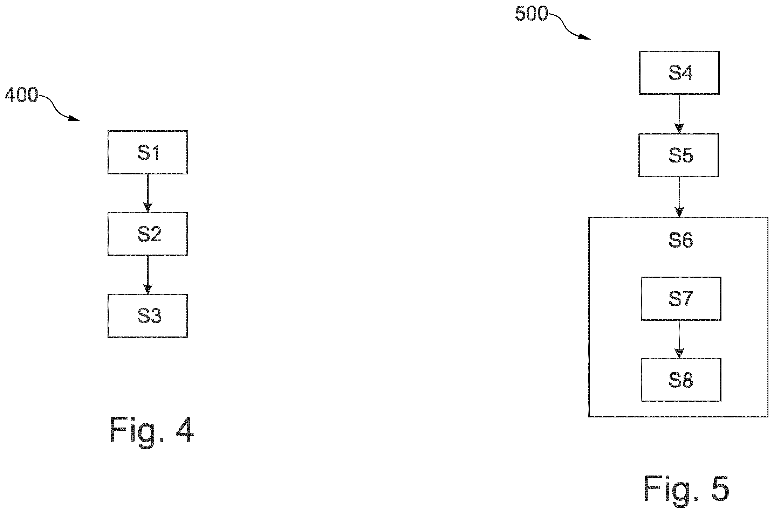

Figure 4 schematically illustrates a flow diagram of an embodiment of a method according to the present invention. Figure 4 particularly shows a method 400 for manufacturing an interface plug 100 for an electrical connector 200, wherein the method 400 comprises the step S1 of providing an insulating element 1 for least partially covering an interface 3 of the electrical connector 200. Further, the method 400 comprises the step S2 of providing an engagement element 5 which is engageable by an engagement tool 9 such that, upon engagement of the engagement tool 9 with the engagement element 5, a force is applicable by the engagement tool 9 to the interface plug 100 via the engagement element 5, wherein the engagement element 5 comprises a breaking feature 11, which is adapted to break when a force applied by the engagement tool 9 exceeds a predetermined threshold limit, wherein, when the breaking feature 11 breaks, the engagement tool 9 is disengaged from the engagement element 5. Further, the method 400 comprises the step S3 of fixedly connecting the insulating element 1 and the engagement element 5 such that the engagement element at least partially protrudes from a front surface 7 of the insulating element 1 in an extension direction 300.

Figure 5 schematically illustrates a flow diagram of an embodiment of a use of the interface plug according to the present invention. It is accordingly illustrated how the interface plug 100 can be mounted to an electrical connector 200, wherein the use 500 of the interface plug 100 comprises the step S4 of providing an electrical connector 200. Further, the use 500 of the interface plug 100 comprises the step S5 of providing the interface plug 100. Further, the use 500 of the interface plug 100 comprises the step S6 of attaching the interface plug 100 to the electrical connector 200. Further the attaching step S6 comprises the step S7 of engaging the interface plug 100 with an engagement tool 9, and the step S8 of applying a force by the engagement tool 9 to the interface plug 100 via the engagement element 5 until the breaking feature 11 breaks.

### LIST OF REFERENCE SIGNS

- 1: insulating element
- 3: interface
- 5: engagement element
- 7: insulating element front surface
- 9: engagement tool
- 11: breaking feature
- 13: inner engagement element portion
- 15: outer engagement element portion
- 17: narrowed portion
- 19: engagement limiting feature
- 21: outer lateral surface
- 23: engagement depth
- 25: recess
- 27: ring
- 29: plug receiving portion
- 31: torque direction
- 33: engagement element front surface
- 35: initial engagement direction
- 37: first engagement element portion
- 39: second engagement element portion
- 51: conductor
- 53: nut reception portion
- 55: screw reception portion
- 57: nut
- 59: screw
- 61: insulation
- 100: interface plug
- 200: electrical connector
- 300: extension direction
- 350: mounting direction
- 400: method
- 500: use
- S1 to S8: method steps

## Claims

1. An interface plug (100) for an electrical connector (200), wherein the interface plug (100) comprises:
at least one insulating element (1) for covering at least partially at least one interface (3) of the electrical connector (200);
at least one engagement element (5) fixedly connected to the insulating element (1) and at least partially protruding from a front surface (7) of the insulating element (1) in an extension direction (300),
wherein the engagement element (5) is engageable by an engagement tool (9) such that a force is applicable by the engagement tool (9) to the interface plug (100) via the engagement element (5),
wherein the engagement element (5) comprises at least one breaking feature (11), which is adapted to break when the force applied by the engagement tool (9) exceeds a predetermined threshold limit,
wherein, when the breaking feature (11) breaks, the engagement tool (9) is disengaged from the engagement element (5).

2. The interface plug (100) according to the preceding claim,
wherein the engagement element (5) at least partially comprises a hexagonal cross-sectional shape as seen in a direction perpendicular to the extension direction (300).

3. The interface plug (100) according to one of the preceding claims,
wherein the engagement element (5) comprises at least one first thickness in a plane perpendicular to the extension direction (300),
and wherein the breaking feature (11) is formed by at least one narrowed portion (17) having at least one reduced thickness compared to the first thickness.

4. The interface plug (100) according to the preceding claim,
wherein the narrowed portion (17) has a thickness in a range of 0.5 mm to 50 mm, preferably in a range of 2 mm to 25 mm, more preferably in a range of 5 mm to 15 mm, and most preferred about 8.5 mm.

5. The interface plug (100) according to one of the preceding claims 3 or 4,
wherein the narrowed portion (17) extends in the extension direction (300) in a range of 0.05 mm to 5 mm, preferably in a range of 0.1 mm to 3 mm, more preferably in a range of 0.5 mm to 2 mm, and most preferred about 1.6 mm.

6. The interface plug (100) according to one of the preceding claims 3 to 5,
wherein the narrowed portion (17) is formed as a truncated cone having a lateral outer surface which inclines in the extension direction in a range of 10° to 60°, preferably in a range of 15° to 50°, more preferably in a range of 25° to 35° mm, and most preferred about 30°.

7. The interface plug (100) according to one of the preceding claims,
wherein the engagement element (5) comprises at least one engagement limiting feature (19) arranged at an outer lateral surface (21) of the engagement element (5),
wherein the engagement limiting feature (19) is adapted to limit an engagement depth (23) of an engagement tool (9) engaging the engagement element (5) against the extension direction (300).

8. The interface plug (100) according to the preceding claim,
wherein the engagement limiting feature (19) is formed by at least one recess (25) arranged at the outer lateral surface (21) of the engagement element (5) and at least one ring (27) at least partially arranged in the recess (25),
wherein at least a portion of an outer surface of the ring (27) extends beyond the outer lateral surface (21) of the engagement element (5).

9. The interface plug (100) one of the preceding claims 7 or 8,
wherein the engagement limiting feature (19) is arranged at the engagement element (5) in a region between the front surface (7) of the engagement element (5) and the breaking feature (11).

10. The interface plug (100) according to one of the preceding claims,
wherein the engagement element (5) is adapted to be engageable by a rotational engagement tool (9) such that, upon engagement of the rotational engagement tool (9) with the engagement element (5), a torque can be applied by the engagement tool (9) to the interface plug (100) via the engagement element (5), and
wherein the breaking feature (11) is adapted to break when the applied torque exceeds a predetermined torque threshold limit.

11. The interface plug (100) according to the preceding claim,
wherein the predetermined torque threshold limit is set in a range of 5 to 200 Nm, preferably in a range of 10 to 100 Nm, more preferably in a range of 20 to 50 Nm, and most preferred to about 32 Nm.

12. An electrical connector (200) comprising the interface plug (100) according to one of the preceding claims 1 to 11.

13. The electrical connector (200) according to the preceding claim,
wherein the electrical connector is a separable connector operating in a range of 12kV to 36kV.

14. Method (400) for manufacturing an interface plug (100) according to one of the preceding claims 1 to 11, comprising the steps of:
providing (S1) an insulating element (1) for at least partially covering an interface (3) of the electrical connector (200),
providing (S2) an engagement element (5) which is engageable by an engagement tool (9) such that, upon engagement of the engagement tool (9) with the engagement element (5), a force is applicable by the engagement tool (9) to the interface plug (100) via the engagement element (5),
wherein the engagement element (5) comprises a breaking feature (11), which is adapted to break when a force applied by the engagement tool (9) exceeds a predetermined threshold limit,
wherein, when the breaking feature (11) breaks, the engagement tool (9) is disengaged from the engagement element (5), and
fixedly connecting (S3) the insulating element (1) and the engagement element (5) such that the engagement element at least partially protrudes from a front surface (7) of the insulating element (1) in an extension direction (300).

15. Use (500) of an interface plug (100) according to one of the preceding claims 1 to 11, comprising the steps of:
providing (S4) an electrical connector (200),
providing (S5) the interface plug (100), and
attaching (S6) the interface plug (100) to the electrical connector (200), wherein the attaching step (S6) comprises the steps of:
engaging (S7) the interface plug (100) with an engagement tool (9), and
applying (S8) a force by the engagement tool (9) to the interface plug (100) via the engagement element (5) until the breaking feature (11) breaks.
